# DEMANDE DE BREVET EUROPEEN

(11) **EP 1 102 094 A1**
(43) Date de publication de la demande: **23.05.2001**
(21) Numéro de dépôt: 00403206.6
(22) Date de dépôt: 16.11.2000
(51) Int. Cl.: G02B 6/16

(54) **Fibre optique conçue pour réaliser des filtres égalisateur de gain d'amplificateur a fibre dopée**

(30) Priorité: 16.11.1999 FR 9914345
(71) Demandeur: SA Highwave Optical Technologies, 22300 Lannion (FR)
(72) Inventeur: Brilland, Laurent, 22700 Perros-Guirec (FR); Pureur, David, 22700 Perros-Guirec (FR); Bayon, Jean-Francois, 22300 Lannion (FR); Delevaque, Eric, 22300 Ploumilliau (FR)
(74) Mandataire: Texier, Christian

(57) **Abrégé**

La présente invention concerne une fibre optique, caractérisée par le fait qu'elle comprend un coeur (10) et une gaine (20) photosensible à un rayonnement, présentant une perturbation périodique de l'indice de réfraction du coeur (10) et de la gaine photosensible (20), définissant au moins un réseau de Bragg selon des traits inclinés par rapport à l'axe (O-O) de la fibre, dans laquelle la différence d'indice de réfraction entre le coeur (10) et la gaine (20) est inférieur à 3.10⁻³.

## Description

La présente invention concerne le domaine des fibres optiques.

Plus précisément, la présente invention concerne la conception d'une fibre optique adaptée pour réaliser des filtres dissipatifs d'énergie et sélectifs en longueur d'onde, aptes à servir de filtres égaliseurs de gain d'amplificateur à fibre dopée.

Le domaine des fibres optiques a déjà donné lieu à une littérature abondante.

La fibre optique est un guide d'onde. Elle est dite monomode lorsqu'un seul mode lumineux se propage à travers elle. Celui-ci est appelé mode fondamental.

L'homme de l'art sait que certains dopants insérés dans la fibre (Germanium, fluor,....) sont sensibles à un rayonnement lumineux (rayonnement ultraviolet pour les dopants cités) et que les réactions physico/chimiques provoquées par ce rayonnement peuvent provoquer une modification de l'indice de réfraction de la partie photosensible.

Une perturbation périodique de l'indice de réfraction de la partie photosensible de la fibre constitue un réseau de Bragg.

La réponse spectrale des réseaux de Bragg à pas courts réalisés dans une fibre optique résulte du couplage du mode fondamental co-propagatif vers des modes de gaine contra-propagatifs et vers le mode contra-propagatif guidé. Le couplage contra-propagatif guidé correspond à la partie qui est réfléchie dans la direction opposée à celle du mode fondamental (on l'appelle également réflexion ou puissance réfléchie). Les modes de gaine contra-propagatifs sont des modes se propageant dans la gaine qui entoure le coeur de la fibre. Si le réseau est enrobé d'un matériau dont l'indice est proche de celui de la silice, les modes de gaine deviennent alors des modes radiatifs. L'ensemble de ces derniers fuient à l'extérieur de la fibre [1, 2].

L'homme de l'art sait par ailleurs que le fait d'incliner les traits du réseau par rapport à l'axe de la fibre favorise le couplage aux modes radiatifs au détriment du couplage contra-propagatif guidé.

De tels réseaux ont déjà été réalisés dans une fibre à coeur photosensible pour rendre uniforme le gain des amplificateurs à fibre dopée. Les résultats sont présentés dans la référence [3]. Un spectre d'émission spontané amplifiée (ASE) a été égalisé à ±0,5 dB sur 35 nm. Le problème de la puissance réfléchie est très brièvement abordé. Dans la référence [4], Erdogan montre que l'évolution de la puissance réfléchie par le réseau en fonction de l'angle d'inclinaison des traits est oscillante. Il a été montré que l'amplitude de ces oscillations est plus faible dans le cas d'inscription de réseaux dans une fibre où une partie de la gaine est aussi photosensible que le coeur [5]. Les réseaux à traits inclinés inscrits dans une fibre à gaine photosensible ont déjà été utilisés pour égaliser la bande de gain de l'erbium de 1543,5 nm à 1561,5 nm [6].

Cependant à la connaissance des inventeurs, malgré les nombreuses recherches conduites dans le domaine, aucun filtre égalisateur de gain composé de réseaux de Bragg à traits inclinés réalisés dans une fibre à coeur et à gaine photosensible n'a encore été mis au point pour rendre uniforme le gain des amplificateurs à fibre sur une plage de longueur d'onde de plus de 20 nm.

L'invention a pour but d'améliorer l'état de la technique connu en proposant un tel dispositif.

Ce but est atteint dans le cadre de la présente invention grâce à une fibre optique dont le coeur et une partie de la gaine sont photosensibles à un rayonnement, par exemple ultraviolet et dans laquelle la différence d'indice de réfraction entre le coeur et la gaine (Δn) est inférieure à 3.10⁻³.

Selon une autre caractéristique avantageuse de la présente invention, le paramètre de fréquence normalisée V est plus faible que 1,5 à la longueur d'onde de 1,55 µm.

Selon une autre caractéristique avantageuse de la présente invention, le rayon b de la gaine photosensible est supérieur de 1,5 fois au moins au rayon du coeur a.

Selon une autre caractéristique avantageuse de la présente invention, l'inclinaison des traits du réseau de Bragg, par rapport à l'axe O-O de la fibre est supérieure à 3°.

Selon une autre caractéristique avantageuse de la présente invention, comprend de trois à cinq réseaux de Bragg possédant des caractéristiques spectrales différentes.

D'autres caractéristiques, buts et avantages de la présente invention apparaîtront à la lecture de la description détaillée qui va suivre et en regard des dessins annexés, donnés à titre d'exemple non limitatif et sur lesquels :
- la figure 1 représente schématiquement la section transverse d'une fibre à gaine photosensible conforme à la présente invention,
- la figure 2 illustre une vue latérale d'une telle fibre comportant un réseau de Bragg à traits inclinés et illustre notamment la définition de l'angle de blaze d'un tel réseau,
- la figure 3 représente les réponses spectrales de réseaux inscrits avec un angle de blaze de 4° dans une fibre à gaine photosensible (fibre 1) conforme à la présente invention et dans une fibre classique (fibre 2) sans gaine photosensible,
- la figure 4 représente la réponse spectrale expérimentale d'un réseau de Bragg à traits inclinés inscrit dans une fibre à gaine photosensible conforme à la présente invention,
- la figure 5 représente l'installation d'une fibre conforme à la présente invention disposée sur un support apte à assurer une stabilisation thermique des réseaux à traits inclinés, et
- la figure 6 représente la réponse transmission/longueur d'onde d'un filtre égaliseur de gain d'amplificateur à fibre dopée composé de trois réseaux à traits inclinés conforme à la présente invention.

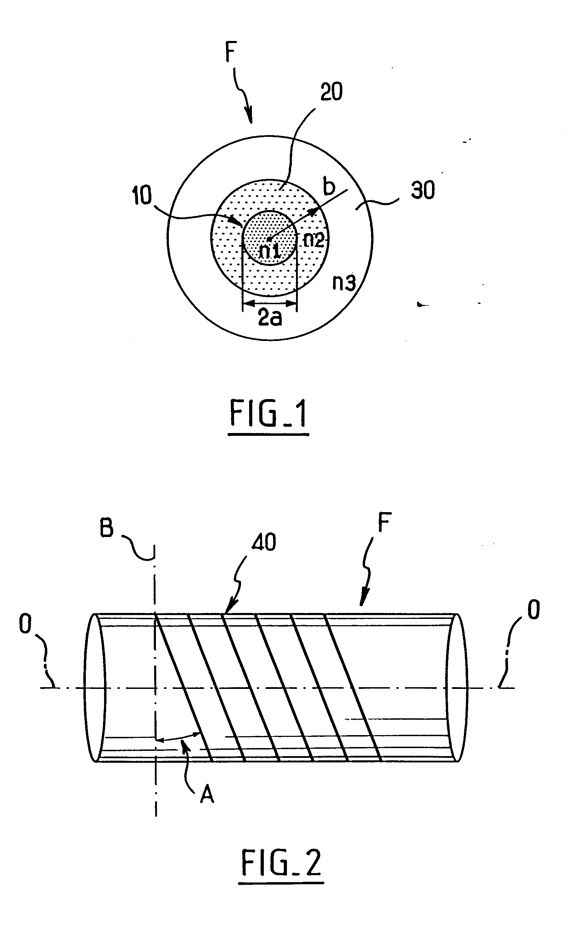

On aperçoit sur la figure 1 annexée, une fibre F comportant :
- un coeur 10 d'indice n1, en matériau photosensible, de diamètre 2a,
- une gaine 20 qui entoure le coeur 10, d'indice n2, en matériau photosensible et de rayon b, et
- une enveloppe externe 30 d'indice n3 qui entoure elle-même la gaine 20 (l'indice n3 est égal l'indice n2 à quelques 10⁻⁴ près).

L'inscription de réseaux de Bragg à traits inclinés dans cette fibre s'effectue de préférence de la manière suivante : une source ultraviolette insole la fibre optique disposée dans un champ de franges d'interférences réalisées par un dispositif prévu à cet effet. On appel angle de blaze, l'angle A formé par la perpendiculaire B à l'axe O-O de la fibre et la direction des traits 40 du réseau (figure 2). Cet angle A conditionne la largeur spectrale du réseau. Plus l'angle de blaze A est élevé et plus la réponse spectrale due au couplage aux modes radiatifs est large. A un angle de blaze A fixé, pour un niveau d'atténuation identique et pour une même longueur d'onde centrale, la largeur spectrale diminue avec la différence d'indice entre le coeur 10 et la gaine 20. La combinaison coeur 10 et gaine 20 photosensibles et une différence d'indice Δn inférieure à 3.10⁻³ (avec V<1,5) conforme à la présente invention, rend la réponse spectrale symétrique et étroite.

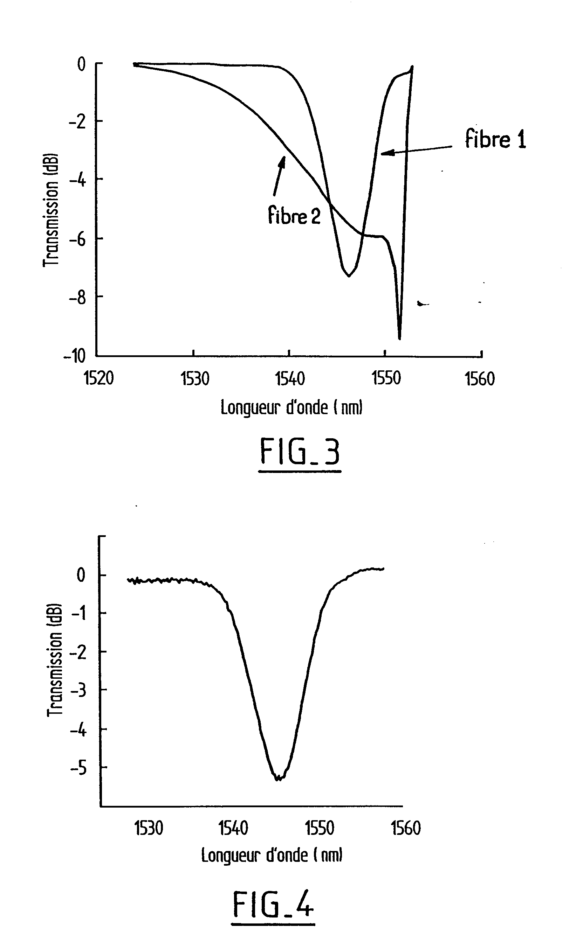

La figure 3 représente le calcul de la transmission spectrale en fonction de la longueur d'onde de réseaux à traits inclinés inscrits dans deux fibres différentes. La première fibre conforme à la présente invention, possède un coeur 10 et une gaine 20 photosensibles (b=3*a), la différence d'indice entre le coeur et la gaine étant de : Δn =2.10⁻³ et V=1,5 à 1,55 µm. La deuxième fibre possède au contraire un coeur photosensible, mais une gaine qui n'est pas photosensible, : Δn =5.10⁻³ et V=2 à 1,55 µm. Dans les deux cas, l'angle de blaze est de 4 degrés. La figure 3 montre que le réseau réalisé dans la fibre 1, conforme à la présente invention, présente un spectre symétrique et plus étroit que celui réalisé dans la fibre 2 conforme à l'état de la technique.

Le spectre d'un réseau à traits inclinés réalisé dans la fibre 1, conforme à la présente invention, est représenté sur la figure 4. Le profil spectrale est symétrique, la transmission minimale est de -5 dB à une longueur d'onde proche de 1547 nm. La largeur à mi hauteur de ce filtre est de 8 nm. L'angle de blaze A utilisé est de 5 degrés.

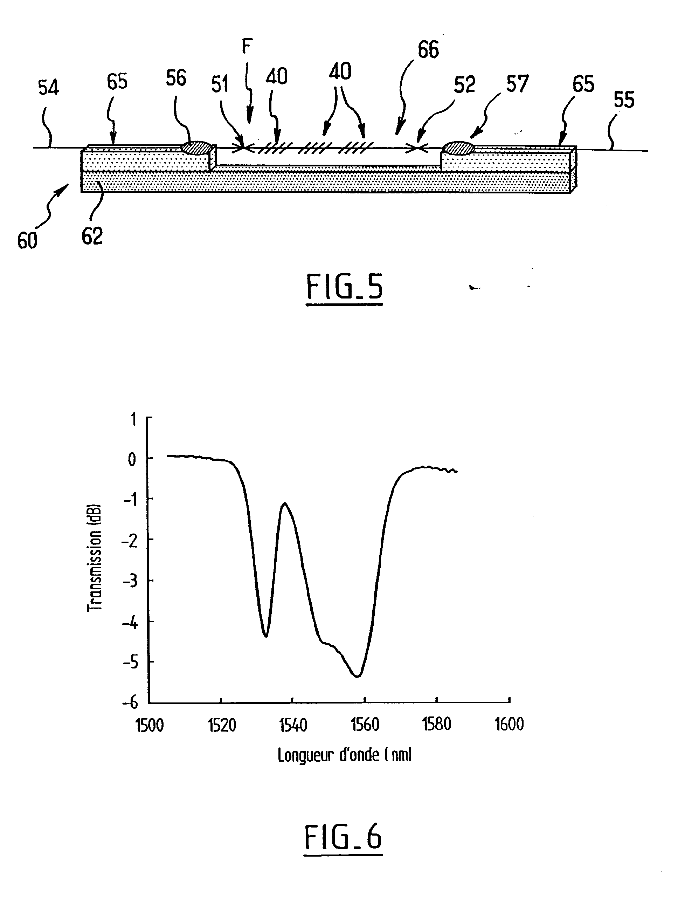

Dans le cadre de la présente invention, les réseaux à traits inclinés sont inscrits de préférence sur une longueur de fibre de l'ordre de 20 mm. Les deux extrémités de celle-ci sont soudées en 51, 52 à des tronçons respectifs de fibre de type 2 référencés 54, 55 sur la figure 5. Les pertes des soudures sont inférieures à 1dB. L'ensemble est disposé sur un montage 60 permettant de compenser la sensibilité à la température des réseaux (figure (5)). Ce dispositif garantit une sensibilité de la longueur d'onde à la température inférieure à 1pm/°C.

Un tel montage conçu pour compenser la sensibilité à la température des réseaux peut faire l'objet de différents modes de réalisation.

Il peut s'agir par exemple d'un montage connu sous la dénomination anglo-saxone "table top" tel que décrit dans les documents [7, 8].

Comme illustré sur la figure 5, un tel système comprend un support 60 composé de deux matériaux 62, 65 possédant des coefficients de dilatation thermique α1 et α2 différents. Plus précisément encore, le support 60 comprend un barreau 62 réalisé en un premier matériau M1 présentant un coefficient de dilatation thermique α1 et deux tronçons 65 réalisés dans le second matériau M2 de coefficient de dilatation thermique α2, fixé au voisinage des extrémités du barreau 62 précité. Il est ainsi défini un espace 66 entre les deux tronçons 65.

La fibre F conforme à l'invention possédant les réseaux de Bragg à traits inclinés 40 est placée dans cet espace 66. On aperçoit également sur la figure 5 les zones de soudure 51, 52 définies entre les extrémités de cette fibre F et les tronçons 54, 55 de fibre de type 2 qui l'a plongent. Lesdits tronçons 54, 55 sont eux-mêmes fixés en des points 56, 57 respectivement sur les tronçons 65 de matériau M2. Les réseaux de Bragg 40 sont ainsi positionnés entre les points de fixation 56, 57 dans l'espace 66. De préférence, la fixation au niveau des points 56, 57 est opérée en appliquant au moins une légère tension à la fibre F.

Il a été montré qu'une optimisation des longueurs des éléments 62, 65 composant le support permet de maintenir la longueur de Bragg constante quelle que soit la variation de température.

Le dispositif conforme à la présente invention peut trouver de nombreuses applications.

Les réseaux à traits inclinés 40 réalisés dans cette fibre sont des filtres dissipatifs d'énergie et sélectifs en longueur d'onde. Ils peuvent être utilisés en tant que capteur ( capteur de température, de traction, de compression). Ils sont également sensibles à l'indice du milieu extérieur à la fibre.

Les amplificateurs à fibre dopée sont des éléments clés pour les systèmes de transmission à multiplexage en longueur d'onde. Il est nécessaire de rendre leur gain le plus uniforme possible afin d'optimiser au mieux la distance de propagation des signaux pour un taux d'erreurs binaires donné.

La fibre conforme à la présente invention permet l'inscription de réseaux de Bragg à traits inclinés adaptés pour égaliser le gain des amplificateurs à fibre dopée. La symétrie et la largeur de la réponse spectrale de tels réseaux permet de rendre uniforme le gain des amplificateurs sur plus de 20 nm. Pour cela, plusieurs réseaux possédant des caractéristiques spectrales différentes (transmission, longueur d'onde centrale et largeur) peuvent être inscrits dans la dite fibre pour former un filtre égalisateur de gain.

On a par exemple sur la figure 6, la réponse (transmission en dB en fonction de la longueur d'onde) d'un filtre égaliseur de gain d'amplificateur à fibres dopées, comprenant trois réseaux de Bragg à traits inclinés réalisés dans une fibre conforme à la présente invention.

Celui-ci est ensuite inséré dans un module d'amplificateur à fibre.

Plus particulièrement, en ajustant l'angle de blaze A, on obtient une finesse et une symétrie spectrale suffisante pour écraser le pic de gain des amplificateurs situé à une longueur d'onde proche de 1532 nm. Cela permet de rendre uniforme la bande de gain de 1528 nm à 1540 nm.

Bien entendu la présente invention n'est pas limitée au mode de réalisation particulier qui vient d'être décrit, mais s'étend à toutes variantes conformes à son esprit.
[1] : V. Mizrahi and J.E. Sipe, « Optical properties of photosensitive fiber phase gratings », IEEE, Journal of Lightwave Technology, Vol. 11, No. 10, oct 1993.
[2] : E. Erdogan, « Fiber Grating spectra », IEEE, J. L. Technology, Vol. 15, No. 8,1997.
[3] : R. Kashyap, R. Wyatt and R.J. Campbell, « Wideband gain flattened erbium fibre amplifier using a photosensitive fibre blazed grating », Elect. Lett., Vol. 29, pp 154-156, 1993.
[4] :E. Erdogan, J.E. Sipe, « Tilted fiber phase gratings », J. Opt. Soc. Am. A, Vol. 13, No.2, 1996.
[5] : L. Brilland, D. Pureur, J.F. Baton and E. Delevaque, « Slanted gratings UV-written in photosensitive cladding fibre », Elect. Letters, Vol.35, No. 3, pp234-236, 1999.
[6] : I. Riant, L. Gasca, P. Sansonetti, G. Bourret, J. Chesnoy, « Gain equalization with optimized slanted Bragg grating on adapted fibre for multichannel long-haul submarine transmission » Optical Fiber Communication Conference, ThJ6, San Diego, february 1999.
[7] : G. W. Yoffe, P.A. Krug. F. Ouelette, "Temperature-Compensated optical fiber Bragg gratings.", OFC 95
[8] : S. Pitassi et al, "Fiber gratings : Temperature and mechanical sensitivity of narrow band transmission filters using different packaging solutions" Cables and Optical Technologies, Italy.

## Revendications

1. Fibre optique, caractérisée par le fait qu'elle comprend un coeur (10) et une gaine (20) photosensible à un rayonnement, présentant une perturbation périodique de l'indice de réfraction du coeur (10) et de la gaine photosensible (20), définissant au moins un réseau de Bragg selon des traits inclinés par rapport à l'axe (O-O) de la fibre, dans laquelle la différence d'indice de réfraction entre le coeur (10) et la gaine (20) est inférieur à 3.10⁻³.

2. Fibre selon la revendication 1, caractérisée par le fait que le paramètre de fréquence normalisé (V) est inférieur à 1,5 à la longueur d'onde de 1,55 µm.

3. Fibre selon l'une des revendications 1 ou 2, caractérisée par le fait que le rayon (b) de la gaine photosensible (20) est supérieur de 1,5 fois au moins au rayon du coeur (a).

4. Fibre selon l'une des revendications 1 à 3, caractérisée par le fait que le rayon (b) de la gaine photosensible (20) est égal à trois fois le rayon du coeur (a).

5. Fibre selon l'une des revendications 1 à 4, caractérisée par le fait que la différence d'indice de réfraction entre le coeur (10) et la gaine (20) est égale à 2.10⁻³.

6. Fibre selon l'une des revendications 1 à 5, caractérisée par le fait que l'inclinaison des traits du réseau de Bragg (40), par rapport à l'axe (0-O) de la fibre est supérieure à 3°.

7. Fibre selon l'une des revendications 1 à 6, caractérisée par le fait que des réseaux de Bragg à traits inclinés sont inscrits dans la fibre (F) sur une longueur de l'ordre de 20 mm.

8. Fibre selon l'une des revendications 1 à 7, caractérisée par le fait qu'elle est disposée sur un support apte à assurer une stabilisation thermique des réseaux (40).

9. Fibre selon l'une des revendications 1 à 8, caractérisée par le fait qu'elle comprend plusieurs réseaux de Bragg possédant des caractéristiques spectrales différentes pour former un filtre égaliseur de gain.

10. Fibre selon la revendication 9, caractérisée par le fait qu'elle comprend de trois à cinq réseaux de Bragg possédant des caractéristiques spectrales différentes.
